(19) Europäisches Patentamt
European Patent Office
Office européen des brevets

(11) EP 2 995 641 B1

(12) EUROPEAN PATENT SPECIFICATION

(45) Date of publication and mention of the grant of the patent:
**25.12.2019 Bulletin 2019/52**

(21) Application number: **14184408.4**

(22) Date of filing: **11.09.2014**

(51) Int Cl.:
***C08J 5/18*** *(2006.01)* ***C08L 23/12*** *(2006.01)*
***H01G 4/33*** *(2006.01)* ***H01G 4/18*** *(2006.01)*
***C08K 5/00*** *(2006.01)* ***C08L 23/10*** *(2006.01)*

# (54) Polypropylene composition for capacitor film

Polypropylenzusammensetzung für Kondensatorfilm

Composition de polypropylène pour un film de condensateur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.03.2016 Bulletin 2016/11**

(73) Proprietor: **Borealis AG**
**1220 Vienna (AT)**

(72) Inventors:
- **Gitsas, Antonis**
  **4021 Linz (AT)**
- **Gloger, Dietrich**
  **4020 Linz (AT)**
- **Braun, Hermann**
  **4040 Linz (AT)**
- **Wolfschwenger, Johannes**
  **4491 Niederneukirchen (AT)**
- **Jacobs, Franciscus**
  **9940 Evergem (BE)**

(74) Representative: **Lux, Berthold**
**Maiwald Patentanwalts- und Rechtsanwaltsgesellschaft mbH**
**Elisenhof**
**Elisenstraße 3**
**80335 München (DE)**

(56) References cited:
**EP-A1- 1 952 970**
**EP-A1- 2 103 426**
**EP-A1- 2 410 539**
**EP-A1- 2 415 791**
**EP-A1- 2 565 221**
**EP-A1- 2 684 676**
**EP-A1- 2 701 165**
**US-A1- 2010 047 544**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 995 641 B1

## Description

The present invention relates to a polypropylene composition with improved processability and heat resistance for use in a capacitor film, as well as a cast film and a biaxially oriented film for the use as capacitor film comprising such polypropylene composition.

Polypropylene is used in many applications and is for instance the material of choice in the field of film capacitors as its chain lacks any kind of polar groups which orient under electrical field stress. Recently, various types of electric equipment have been incorporating inverters, and along with this trend, demands have been growing for capacitors smaller in size and enhanced in capacitance. Because of these demands from the market, biaxially oriented polypropylene (BOPP) films, which are thinner and improved in both mechanical properties and electrical properties, are preferably used in the field of capacitor applications.

Capacitor films must withstand extreme conditions like high temperatures and must have high electrical breakdown strength. Additionally it is appreciated that capacitor films possess good mechanical properties like a high stiffness and also high operating temperatures. The upper 43% of the total capacitor film grades, namely for power applications such as welding, e-vehicles, trains, ovens, wind mills, solar panels etc, is using high isotactic polypropylene (HIPP) resins, Apart from balanced shrinkage and optimised surface roughness, the main advantage associated with the high isotacticity is the high heat resistance of the final film, relating to the high crystallinity, the high onset temperature of the melting and the high peak melting temperature. Therefore, the latest efforts in the field are improving the crystallinity and heat resistance of the material. For example, it was described in EP2701165 A1 and EP 2684676 A1 that polypropylene having a chain backbone with side branches, which is known to enhance the crystallization process of linear polypropylene, is contained in the polypropylene resin to increase the melting temperature and heat resistance of the final BOPP film.

However, the increase of crystallinity and melting point of the base resin associated with the addition of branched polypropylene makes the material too stiff and typically reduces the toughness, i.e. the elongation at break, of the BOPP film prepared from such resin. This causes severe disadvantages during the BOPP producing process, for example, the increasing likeliness of film breaks during the BOPP production.

Thus, there is still a need in the art for providing improved polypropylene compositions for use in capacitor film. It is therefore the object of the present invention to provide a polypropylene composition featuring high heat resistance, i.e. high melting and crystallisation temperature as well as improved processability during BOPP production, compared to prior art. Preferably BOPP films comprising such a polypropylene would also have an improved dielectric break down strength.

The present invention is based on the finding that the good heat resistance and good processability can be accomplished by combining beta-nucleation of polypropylene with high purity with a long chain branched polypropylene.

Thus the present invention is directed to a polypropylene composition comprising

a) 95.0-99.9 wt% of propylene homopolymer (A) having

(i) an melt flow rate $MFR_2$ (230 °C) measured according to ISO 1133 in the range of 1.5- 10 g/10min

(ii) an ash content of < 60 ppm

b) 0.1- 5.0 wt% of long chain branched polypropylene (B), and

c) up to 1000 ppm of beta-nucleating agent

In the above composition the beta-nucleating agent acts to increase the toughness of the composition, which is achieved by causing at least a part of the polypropylene to crystallise in the hexagonal or pseudohexagonal beta-modification, while long chain branched polypropylene (B) is responsible for an increased crystallization and melting temperature of the composition. It has been found that such a polypropylene composition provides the BOPP film made thereof with a better processability and surprisingly also with an improved electrical breakdown strength.

In the following the present invention is described in more detail.

The polypropylene compositions according to the invention may contain up to 99.9% of propylene homopolymer (A). This is about the maximum reasonable content of component A where the respective amounts of the remaining components are still sufficiently high to achieve the desired effects.

Accordingly, preferred polypropylene compositions of the invention comprise 95.0-99.9, preferably 96.0-99.9 wt%, more preferably 97.0-99.9 wt%, like 98.5-99.0 wt% of polypropylene homopolymer (A) and 0.1-5.0%, preferably 0.1-4.0%, more preferably 0.1-3.0%, like 0.1- 1.5 wt% of long chain branched polypropylene (B).

The expression homopolymer used in the instant invention relates to a polypropylene that consists substantially,

i.e. of at least 99.5 wt.-%, more preferably of at least 99.8 wt.-%, of propylene units. In a preferred embodiment only propylene units in the propylene homopolymer (H-PP) are detectable. The comonomer content can be determined with $^{13}C$ NMR spectroscopy, as described below in the examples.

Further, it is appreciated that the propylene homopolymer (A) is a linear polypropylene.

Furthermore, it is preferred that the propylene homopolymer (A) of the present invention has a melt flow rate (MFR) given in a specific range. The melt flow rate measured under a load of 2.16 kg at 230 °C (ISO 1133) is denoted as $MFR_2$(230 °C). Accordingly, it is preferred that in the present invention the polypropylene homopolymer (A) has an MFR2 (230 °C) of at least 1.5 g/10min, more preferably of at least 2.5 g/10min. Accordingly it is appreciated that the $MFR_2$ (230 °C) measured according to ISO 1133 of the polypropylene homopolymer (A) is in the range of 1.5 to 10.0 g/10min, more preferably in the range of 2.5 to 6.0 g/10min, like in the range of 2.5 to 4.5 g/10min.

Furthermore, it is also preferred that the polypropylene composition of the present invention has a melt flow rate (MFR) given in the specific range. Accordingly, it is preferred that in the present invention the polypropylene composition has an $MFR_2$ (230 °C) of at least 1.5 g/10min, more preferably of at least 2.5 g/10min. Accordingly it is appreciated that the $MFR_2$(230 °C) measured according to ISO 1133 of the polypropylene composition is in the range of 1.5 to 10.0 g/10min, more preferably in the range of 2.5 to 6.0 g/10min, like in the range of 2.5 to 4.5 g/10min.

One important aspect in capacitor films is the low ash content, otherwise the dielectric properties are negatively affected. Accordingly it is appreciated, that the ash content of the polypropylene homopolymer (A) is rather low, i.e. has an ash content measured according to ISO 3451-1 (1997) of equal or below 60 ppm, more preferably equal or below 50 ppm, more preferably equal or below 40 ppm, more preferably equal or below 30 ppm, like in the range of 10 to 50 ppm. Also it is appreciated, that the ash content of the entire polypropylene composition is rather low, i.e. has an ash content measured according to ISO 3451-1 (1997) of equal or below 60 ppm, more preferably equal or below 50 ppm, more preferably equal or below 40 ppm, more preferably equal or below 30 ppm, like in the range of 10 to 50 ppm.

As usual 1 ppm of additive corresponds to 1 mg additive in 1 kg polypropylene composition.

In a preferred embodiment of the present invention, the polypropylene homopolymer (A) is highly isotactic. Accordingly it is appreciated that the polypropylene homopolymer (A) has a rather high pentad isotacticity <mmmm>, i.e. higher than 96.0 mol%, more preferably higher than 97.0 mol%. Preferably, the isotacticity <mmmm> of the polypropylene homopolymer (A) is in the range of 96.0 to 99.5 mol%, preferably in the range of 96.0 to 98.5 mol%, still more preferably in the range of 97.0 to 98.0 mol%.

Commercially available polypropylenes in principle useful for capacitors are featured by rather low xylene cold soluble (XCS) content. Therefore, in a further preferred embodiment of the present invention, the polypropylene homopolymer (A) of the instant invention is featured by rather low xylene cold soluble (XCS) content, i.e. by a xylene cold soluble (XCS) content of equal or below 2.0 wt%, more preferably of equal or below 1.8 wt%, yet more preferably equal or below 1.6 wt%. Thus it is in particular appreciated that the polypropylene homopolymer (A) of the instant invention has a xylene cold soluble (XCS) content in the range of 0.3 to equal or below 2.0 wt%, more preferably in the range of 0.3 to equal or below 1.8 wt%, yet more preferably in the range of 0.4 to equal or below 1.6 wt%.

The amount of xylene cold soluble (XCS) additionally indicates that the polypropylene homopolymer (A) is preferably free of any elastomeric polymer component, like an ethylene propylene rubber. In other words the polypropylene (PP) shall be not a heterophasic polypropylene, i.e. a system consisting of a polypropylene matrix in which an elastomeric phase is dispersed. Such systems are featured by a rather high xylene cold soluble content.

The Term "long chain branched polypropylene" used in the present invention refers to a branched polypropylene differing from a linear polypropylene in that the polypropylene backbone has side chains whereas a non-branched polypropylene, i.e. a linear polypropylene, does not have side chains. The side chains have significant impact on the rheology of the polypropylene. Accordingly linear polypropylenes and branched polypropylenes can be clearly distinguished by its flow behaviour under stress.

Branching can be achieved by using specific catalysts, i.e. specific single-site catalysts, or by chemical modification. Concerning the preparation of a branched polypropylene obtained by the use of a specific catalyst reference is made to EP 1 892 264. With regard to a branched polypropylene obtained by chemical modification it is referred to EP 0 879 830 A1. In such a case the branched polypropylene is also called high melt strength polypropylene. The long chain branched polypropylene according to the instant invention is obtained by chemical modification as described in more detail below and thus is a high melt strength polypropylene (HMS-PP). Therefore the terms "long chain branched polypropylene" and "high melt strength polypropylene (HMS-PP)" can be regarded in the instant invention as synonyms.

Therefore the long chain branched polypropylene (B), i.e. the high melt strength polypropylene (HMS-PP), of the present invention has a F30 melt strength of more than 15.0 cN and a v30 melt extensibility of more than 200 mm/s, preferably has a F30 melt strength in the range of 15.0 to 50.0 cN, more preferably 20.0 to 45.0 cN, like 25.0 to 40.0 cN, and a v30 melt extensibility in the range of 200 to 300 mm/s, preferably 215 to 285 mm/s, more preferably 235 to 275 mm/s in order to provide a resulting polypropylene composition with good strain hardening effect. The F30 melt strength and the v30 melt extensibility are measured according to ISO 16790:2005.

The long chain branched polypropylene (B) can be produced by any number of processes, e.g. by treatment

of the unmodified propylene polymer with thermally decomposing radical-forming agents and/or by treatment with ionizing radiation, where both treatments may optionally be accompanied or followed by a treatment with bi- or multifunctional ethylenically unsaturated monomers, e.g. butadiene, isoprene, dimethylbutadiene, divinylbenzene or trivinylbenzene.

"Bifunctional ethylenically unsaturated" as used above means the presence of two nonaromatic double bonds, as in e.g. divinylbenzene or cyclopentadiene. Only such bifunctional ethylenically unsaturated compounds are used which can be polymerised with the aid of free radicals. The bifunctionally unsaturated monomer is in its chemically bound state not actually "unsaturated", because the two double bonds are each used for a covalent bond to the polymer chains of the linear polypropylene.

Examples of the long chain branched polypropylene (B), are in particular:

- polypropylenes modified by reaction with bismaleimido compounds in the melt (EP-A-0 574 801 and EP-A-0 574 804)
- polypropylenes modified by treatment with ionizing radiation (EP 0 190 889 A2)
- polypropylenes modified by treatment with peroxides in the solid phase (EP 0 384 431 A2) or in the melt (EP 0 142 724 A2),
- polypropylenes modified by treatment with bifunctional ethylenically unsaturated monomers under the action of ionizing radiation (EP-A-0 678 527),
- polypropylenes modified by treatment with bifunctional ethylenically unsaturated monomers in the presence of peroxides in the melt (EP-A-0 688 817 and EP-A-0 450 342).

From the above list, these long chain branched polypropylenes (B) are preferred, which are obtained by treatment with peroxides, especially when followed by a treatment with bifunctional ethylenically unsaturated monomers.

A preferred long chain branched polypropylene (B) is obtained by mixing a linear polypropylene with 0.01 to 3 wt% of an organic peroxide which is thermally decomposable under melting conditions of the polypropylene and heating and melting the mixture.

A still more preferred long chain branched polypropylene (B) is obtained by mixing a linear polypropylene with 0.01 to 3 wt% of an organic peroxide which is thermally decomposable under melting conditions of the polypropylene and with from 0.2 to 3 wt% of a bifunctional ethylenically unsaturated monomer and heating and melting the mixture.

The bifunctional ethylenically unsaturated monomer may be added at any time before or during heating and melting the linear polypropylene/peroxide mixture. The bifunctional monomer may also be added to the linear polypropylene before it is mixed with the peroxide.

According to a preferred embodiment the bifunctional monomer is in gaseous or liquid state absorbed by the - still solid - polypropylene.

According to a preferred method long chain branched polypropylene (B) are prepared by mixing a particulate linear propylene polymer with from 0.05 to 3 wt%, based on the linear propylene polymer, of an organic peroxide which is thermally decomposable under melting conditions of the polypropylene (acyl peroxides, alkyl peroxides, peresters and/or peroxycarbonates). The peroxides may optionally be solvatised in an inert solvent. Mixing is performed at temperatures of from 30-100 °C, preferably of from 60-90 °C.

Mixing with the peroxide(s) is followed by contacting the polypropylene/peroxide mixture with the bifunctional ethylenically unsaturated monomer(s). The bifunctional monomer may be in gaseous or liquid state and may be applied in pure or diluted form, e.g. diluted with an inert gas or solvatised in an organic solvent. The bifunctional monomer is allowed to be absorbed by the particulate polypropylene at a temperature of from 20 to 120 °C, preferably of from 60 to 100 °C. Practical sorption times are from 10 to 1000 s, 60 to 600 s being preferred. This typically results in an absorbed amount of bifunctional monomer of from 0.01 to 10 wt%, respectively from 0.05 to 2 wt%, based on the linear propylene polymer.

The polypropylene/peroxide/monomer mixture is then heated and melted in an atmosphere comprising inert gas, e.g. $N_2$, and/or the bifunctional monomer, from sorption temperature to 210 °C. This causes the peroxides to decompose and to generate free radicals at the propylene polymer chains which react with the bifunctional monomers.

The melt is heated up to 280 °C in order to remove unreacted monomers and decomposition products and finally the melt is pelletised.

The linear polypropylene comprises propylene homopolymers, copolymers of propylene and ethylene and/or $\alpha$-olefins with 4 to 18 carbon atoms and mixtures of such homo- and copolymers. According to a preferred embodiment of the present, invention the long chain branched polypropylene (B) is prepared based on a propylene homopolymer with low ash content, preferably an ash content of < 60 ppm.

According to a still further preferred embodiment of the present invention, the long chain branched polypropylene

(B) is prepared based on the propylene homopolymer (A), the propylene homopolyer (A) being linear.

The particulate linear propylene polymer may have the shape of powders, granules or grit.

The above described process preferably is a continuous method, performed in continuous reactors, mixers, kneaders and extruders. Batchwise production of the modified propylene polymer, however is feasible as well.

Preferably the bifunctional monomers are absorbed by the linear propylene polymer from the gas phase.

The bifunctional ethylenically unsaturated monomers preferably are $C_4$ to $C_{10}$ dienes and/or $C_7$ to $C_{10}$ divinyl compounds. Especially preferred are butadiene, isoprene, dimethyl-butadiene or divinylbenzene.

The following peroxides are suitable for the above described process:

- acyl peroxides, such as dibenzoyl peroxide, benzoyl peroxide, 4-chlorobenzoyl peroxide, 3-methoxybenzoyl peroxide and methylbenzoyl peroxide;

- alkyl peroxides such as allyl tert-butyl peroxide, 2,2-di(tert-butylperoxy)butane, di-tert-amyl peroxide, 1,1-bis(tert-butylperoxy)-3,3,5-trimethylcyclohexane, n-butyl 4,4-bis(tert-butylperoxy)valerate, diisopropylaminomethyl tert-amyl peroxide, dimethylaminomethyl tert-amyl peroxide, diethylaminomethyl tert-butyl peroxide, dimethylamino methyl tert-butyl peroxide, 1,1-di(tert-amylperoxy) cyclohexane, tert-amyl peroxide, tert-butyl cumyl peroxide, methyl isobutyl ketone peroxide, 2,2-Di(4,4-di(tert-butylperoxy)cyclohexyl)propane, tert-butyl peroxide and 1-hydroxybutyl n-butyl peroxide;

- peresters and peroxycarbonates, such as tert-butyl peroxyacetate, tert-butyl peroxydiethylacetate, cumyl peracetate, cumyl perpropionate, cyclohexyl peracetate, di-tert-butyl peradipate, di-tert-butyl perazelate, di-tert-butyl perglutarate, di-tert-butyl perphthalate, di-tert-butyl persebacate, 4-nitrocumyl perpropionate, 1-phenylethyl perbenzoate, phenylethyl nitroperbenzoate, tert-butyl bicyclo[2.2.1]heptane percarboxylate, tert-butyl 4-carbomethoxy perbutyrate, tert-amyl peroxy 2-ethylhexyl carbonate, tert-amyl peroxy-2-ethylhexanoate, tert-butyl cyclobutane percarboxylate, 1,4-Di(tert-butylperoxycarbo)cyclohexane, 1,1-Di(tert-butylperoxy)-3,3,5-trimethylcyclohexane, 1,1-Di(tert-butylperoxy)cyclohexane, tert-butyl cyclohexylperoxycarboxylate, tert-butyl cyclopentylpercarboxylate, tert-butyl cyclopropanepercarboxylate, tert-butyl dimethylpercinnamate, tert-butyl 2-(2,2-diphenylvinyl)perbenzoate, tert-butyl peroxy-2-ethylhexanoate, tert-butyl peroxy-3,5,5-trimethylhexanoate, tert-butyl 4-methoxyperbenzoate, tert-butyl peroxybenzoate, tert-butyl pernaphthoate, tert-butylperoxy isopropyl carbonate, tert-butylperoxy 2-ethylhexyl carbonate, tert-butyl pertoluate, tert-butyl 1-phenylcyclopropyl percarboxylate, tert-butyl 2-propylperpenten-2-oate, tert-butyl 1-methylcyclopropylpercarboxylate, tert-butyl 4-nitrophenylperacetate, tert-butyl nitrophenyl peroxycarbamate, tert-butyl N-succinimido percarboxylate, tert-butyl percrotonate, tert-butylpermaleic acid, tert-butyl permethacrylate, tert-butyl peroctoate, tert-butyl peroxyisobutyrate, tert-butyl peracrylate, tert-butyl perpropionate;

and mixtures of these peroxides.

Particularly preferred are dibenzoyl peroxide, tert-butyl peroxy-2-ethylhexanoate, tert-amyl peroxy-2-ethylhexanoate, tert-butyl peroxydiethylacetate, 1,4-Di(tert-butylperoxycarbo)cyclohexane, tert-butyl peroxyisobutyrate, 1,1-Di(tert-butylperoxy)-3,3,5-trimethyl-cyclohexane, Methyl isobutyl ketone peroxide, 2,2-Di(4,4-di(tert-butylperoxy)cyclohexyl)propane, 1,1-Di(tert-butylperoxy)cyclohexane, tert-butyl peroxy-3,5,5-trimethylhexanoate, tert-amyl peroxy 2-ethylhexyl carbonate, 2,2-di(tert-butylperoxy)butane, tert-butylperoxy isopropyl carbonate, tert-butylperoxy 2-ethylhexyl carbonate, tert-butyl peroxyacetate, tert-butyl peroxybenzoate, di-tert-amyl peroxide and mixtures thereof.

These peroxides are preferred, because their mode of action was observed to be a compromise between polymer-chain-length-reducing degradation, which is undesireable in this instance, and the desired long chain branching.

Accordingly, the polypropylene composition comprises beta-nuleating agents with a preferred amount of up to 1000 ppm, like up to 500 ppm, more preferably up to 100 ppm, still more preferably up to 50 ppm, yet more preferably up to 20 ppm, still more preferably up to 10 ppm as a further component.

The term "beta -nucleating agent" refers to any nucleating agent which is suitable for inducing crystallisation of propylene polymers in the hexagonal or pseudohexagonal modification. Mixtures of such nucleating agents may also be employed.

Suitable types of beta -nucleating agents are
dicarboxylic acid derivative type diamide compounds from C5-C8-cycloalkyl monoamines or C6-C12-aromatic monoamines and C5-C8-aliphatic, C5-C8-cycloaliphatic or C6-C12-aromatic dicarboxylic acids, e.g.
N,N'-di-C5-C8-cycloalkyl-2,6-naphthalene dicarboxamide compounds such as
N,N'-dicyclohexyl-2,6-naphthalene dicarboxamide and
N,N'-dicyclooctyl-2,6-naphthalene dicarboxamide,
N,N'-di-C5-C8-cycloalkyl-4,4-biphenyldicarboxamide compounds such as
N,N'-dicyclohexyl-4,4-biphenyldicarboxamide and
N,N'-dicyclopentyl-4,4-biphenyldicarboxamide,

N,N'-di-C5-C8-cycloalkyl-terephthalamide compounds such as
N,N'-dicyclohexylterephthalamide and N,N'-dicyclopentylterephthalamide,
N,N'-di-C5-C8-cycloalkyl-1,4-cyclohexanedicarboxamide compounds such as
N,N'-dicyclo-hexyl-1,4-cyclohexanedicarboxamide and
N,N'-dicyclohexyl-1,4-cyclopentanedicarboxamide,
diamine derivative type diamide compounds from C5-C8-cycloalkyl monocarboxylic acids or C6-C12-aromatic monocarboxylic acids and C5-C8-cycloaliphatic or C6-C12-aromatic diamines, e.g.
N,N'-C6-C12-arylene-bis-benzamide compounds such as
N,N'-p-phenylene-bis-benzamide and N,N'-1,5-naphthalene-bis-benzamide,
N,N'-C5-C8-cycloalkyl-bis-benzamide compounds such as
N,N'-1,4-cyclopentane-bis-benzamide and N,N'-1,4-cyclohexane-bis-benzamide,
N,N'-p-C6-C12-arylene-bis-C5-C8-cycloalkylcarboxamide compounds such as
N,N'-1,5-naphthalene-bis-cyclohexanecarboxamide and
N,N'-1,4-phenylene-bis-cyclohexanecarboxamide, and
N,N'-C5-C8-cycloalkyl-bis-cyclohexanecarboxamide compounds such as
N,N'-1,4-cyclopentane-bis-cyclohexanecarboxamide and
N,N'-1,4-cyclohexane-bis-cyclohexanecarboxamide,
amino acid derivative type diamide compounds from amidation reaction of C5-C8-alkyl, C5-C8-cycloalkyl- or C6-C12-arylamino acids, C5-C8-alkyl-, C5-C8-cycloalkyl- or C6-C12-aromatic monocarboxylic acid chlorides and C5-C8-alkyl-, C5-C8-cycloalkyl- or C6-C12-aromatic mono-amines, e.g.
N-phenyl-5-(N-benzoylamino)pentane amide and
N-cyclohexyl-4-(N-cyclohexyl-carbonylamino)benzamide.

Further suitable beta -nucleating agents are
quinacridone type compounds, e.g.
5,12-dihydro-quino[2,3-b]acridine-7,14-dione (i.e. quinacridone), dimethylquinacridone and dimethoxyquinacridone,
quinacridonequinone type compounds, e.g.
quino[2,3-b]acridine-6,7,13,14(5H,12H)-tetrone (i.e. quinacridonequinone), and dimethoxyquinacridonequinone and dihydroquinacridone type compounds, e.g. 5,6,12,13-tetrahydroquino[2,3-b]acridine-7,14-dione (i.e. a dihydroquinacridone), dimethoxydihydroquinacridone and dibenzodihydroquinacridone.

Still further suitable beta -nucleating agents are dicarboxylic acid salts of metals from group IIa of periodic table, e.g. pimelic acid calcium salt and suberic acid calcium salt; and mixtures of dicarboxylic acids and salts of metals from group IIa of the periodic table.

Still further suitable beta -nucleating agents are salts of metals from group IIa of periodic system and imido acids of the formula

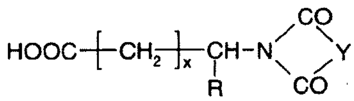

wherein x = 0 to 4; R = H, -COOH, C1-C12-alkyl, C5-C8-cycloalkyl or C6-C12-aryl, and Y = C1-C12-alkyl, C5-C8-cycloalkyl or C6-C12-aryl - substituted bivalent C6-C12-aromatic residues, e.g.
calcium salts of phthaloylglycine, hexahydrophthaloylglycine, N-phthaloylalanine, phthalimidoacetate and/or N-4-methylphthaloylglycine.

Preferred beta -nucleating agents are any one or mixtures of N,N'-dicyclohexyl-2,6-naphtalene dicarboxamide, the beta -nucleating agents of EP 177961 and those of EP 682066.

Particularly preferred beta-nucleating agents are any one or mixtures of 5,12-dihydro-quino[2,3-b]acridine-7,14-dione (CAS 1047-16-1) (i.e. quinacridone), quino[2,3-b]acridine-6,7,13,14(5H,12H)-tetrone (CAS 1503-48-6) (i.e. quinacridonequinone), 5,6,12,13-tetrahydroquino[2,3-b]acridine-7,14-dione (CAS 5862-38-4) (i.e. a dihydroquinacridone), N,N'-dicyclohexyl-2,6-naphtalene dicarboxamide (CAS 153250-52-3) and salts of dicarboxylic acids with at least 7 carbon atoms with metals of group IIa of the periodic table, preferably calcium pimelate (CAS 19455-79-9).

A still more preferred beta-nucleating agent is a mixture of 5,12-dihydro-quino[2,3-b]acridine-7,14-dione (CAS 1047-16-1), quino[2,3-b]acridine-6,7,13,14(5H,12H)-tetrone (CAS 1503-48-6) and 5,6,12,13-tetrahydroquino[2,3-b]acridine-7,14-dione (CAS 5862-38-4), which is commercially available as Cinquasia Gold YT-923-D from BASF.

This beta-nucleating agent is characterised by very high activity. Cinquasia Gold YT-923-D is preferred as beta-nucleating agent because it has a very high activity and is very inexpensive.

According to a preferred embodiment, when the beta-nucleating agent is selected from any one or mixtures of quinacridone type compounds and quinacridonequinone type compounds and dihydroquinacridone type compounds,

the beta nucleating agent is preferably present in the inventive polypropylene composition in an amount of up to 100 ppm, like of up to 70 ppm, more preferably up to 50, still more preferably up to 30 ppm, yet more preferably up to 20 ppm, yet still more preferably up to 10 ppm.

Accordingly, when the beta-nucleating agent is selected from any one or mixtures of 5,12-dihydro-quino[2,3-b]acridine-7,14-dione (CAS 1047-16-1) (i.e. quinacridone) and quino[2,3-b]acridine-6,7,13,14(5H,12H)-tetrone (CAS 1503-48-6) (i.e. quinacridonequinone) and 5,6,12,13-tetrahydroquino[2,3-b]acridine-7,14-dione (CAS 5862-38-4) (i.e. a dihydroquinacridone), the beta nucleating agent is preferably present in the inventive polypropylene composition in an amount of up to 50 ppm, like of up to 40 ppm, more preferably up to 30, still more preferably up to 20 ppm, yet more preferably up to 15 ppm, yet still more preferably up to 10 ppm.

Therefore, when the beta-nucleating agent is a mixture of 5,12-dihydro-quino[2,3-b]acridine-7,14-dione (CAS 1047-16-1), quino[2,3-b]acridine-6,7,13,14(5H,12H)-tetrone (CAS 1503-48-6) and 5,6,12,13-tetrahydroquino[2,3-b]acridine-7,14-dione (CAS 5862-38-4), which is commercially available as Cinquasia Gold YT-923-D from BASF, it is preferably present in the inventive polypropylene composition in an amount of up to 30 ppm, like of up to 25 ppm, more preferably up to 20, still more preferably up to 15 ppm, yet more preferably up to 12 ppm, yet still more preferably up to 10 ppm.

According to a preferred embodiment of the present invention, the polypropylene composition has rather high crystallization temperature ($T_c$). Thus it is preferred that the polypropylene composition has crystallization temperature ($T_c$) measured by differential scanning calorimetry (DSC) of at least 120 °C, more preferably of at least 122 °C, still more preferably of at least 124.0 °C. Accordingly the polypropylene has preferably a crystallization temperature ($T_c$) measured by differential scanning calorimetry (DSC) in the range of 120 to 130 °C, more preferably in the range of 122 to 129 °C, still more preferably in the range of 124.0 to 129 °C. The crystallization temperatures ($T_c$) given in this paragraph refer in particular to the polypropylene composition.

It is further appreciated that the polypropylene composition has two melting peaks during the measurement of differential scanning calorimetry (DSC), which relate to two melting temperatures, $T_m\alpha$ and $T_m\beta$. Accordingly, the $T_m\alpha$ is at least 161.0, preferably at least 163.0, more preferably at least 165.0 °C, and $T_m\beta$ is at least 148.0, preferably at least 149, more preferably at least 150.0 °C. Thus it is in particular appreciated that the melting temperature ($T_m\alpha$) measured by differential scanning calorimetry (DSC) of the polypropylene composition is in the range of 161 to 170 °C, preferably in the range of 163.0 to 170 °C, more preferably in the range of 165.0 to 170 °C. The melting temperatures ($T_m\beta$) measured by differential scanning calorimetry (DSC) of the polypropylene composition is in the range of 148.0 to 160 °C, more preferably in the range of 149.0 to 160 °C, still more preferably in the range of 150.0 to 159 °C, still more preferably in the range of 151.0 to 159 °C. The melting temperatures given in this paragraph refer in particular to the polypropylene composition.

According to a further aspect, the present invention is also directed to a cast film, wherein the cast film comprises the polypropylene composition as defined in the present invention. Preferably in such cast film the crystallinity index ($X_c$) of the polypropylene composition, measured by Wide-angle x-ray scattering (WAXS), is equal or higher than 55.0%, preferably $\geq$ 60.0%, more preferably $\geq$ 65.0%, still more preferably $\geq$ 67.0%.

A further characteristic of the polypropylene composition in the cast film is preferably the amount of beta-modification of crystalline polypropylene. Accordingly it is appreciated that the polypropylene composition in the cast film has a beta-phase of 10 - 50%, more preferably of 10 - 40%, wherein the beta-phase content is measured by wide angle x-ray scattering (WAXS).

Further the invention is also directed to a biaxially oriented polypropylene (BOPP) film, wherein the biaxially oriented polypropylene (BOPP) film comprises at least 80 wt.-%, more preferably comprises at least 90 wt.-%, yet more preferably consists of, the polypropylene composition as defined in the present invention. Preferably the biaxially oriented polypropylene (BOPP) film has a stretching ratio of at least 4 times, preferably at least 5 times, in the machine direction and at least 4 times, preferably at least 5 times, in the transverse direction, more preferably has the stretching ratio of at least 9 times in the machine direction and at least 5 times in the transverse direction.

More preferably the biaxially oriented polypropylene (BOPP) film has an electrical breakdown field strength ($E_b$63%, defined below) measured and evaluated according to a method described in detail in IEEE Transactions on Dielectrics and Electrical Insulation (20013), Vol. 20(3), pp. 937-946, of at least 600 kV/mm, more preferably of at least 650 kV/mm, like at least 700 KV/mm, measured on a biaxially oriented polypropylene (BOPP) film having a draw ratio in machine direction and in transverse direction of at least 5.0 and a thickness of not more than 7$\mu$m.

Additionally the polypropylene composition and/or the biaxially oriented polypropylene (BOPP) film of the instant invention can be employed in capacitor films. In such cases the capacitor film comprises at least 80 wt.-%, more preferably at least 90 wt.-%, yet more preferably at least 99 wt.-% of the polypropylene composition or of the biaxially oriented polypropylene (BOPP) film. In an especially preferred embodiment the capacitor film consists of the polypropylene composition or of the biaxially oriented polypropylene (BOPP) film according to this invention.

The capacitor film, i.e. the biaxially oriented polypropylene (BOPP), can be prepared by conventional drawing processes known in the art. Accordingly the process for the manufacture of a capacitor film, i.e. the biaxially oriented

polypropylene (BOPP), according to this invention comprises the use of the polypropylene composition as defined herein and its forming into a film preferably by the tenter method known in the art.

The tenter method is in particular a method in which the polypropylene composition as defined herein is melt extruded from a slit die such as a T-die and cooled on a cooling drum obtaining an undrawn sheet. Said sheet is pre-heated for example with a heated metal roll and then drawn in the length direction between a plurality of rolls over which a difference in peripheral speeds is established and then both edges are gripped with grippers and the sheet is drawn in the transverse direction in an oven by means of a tenter resulting in a biaxially drawn film. The temperature of said stretched sheet during the longitudinal drawing is preferably controlled in such a way as to be within the temperature range of the melting point of the polypropylene as defined herein (machine direction: -30 to -10°C; transverse direction: -5 to +10°C).

Subsequently, the capacitor film, i.e. the biaxially oriented film (BOPP), can be treated by corona discharge in air, nitrogen, carbon dioxide gas or any of the mixtures on the surface to be metalized, to improve the adhesive strength to the metal to be deposited, and wound by a winder.

In the following examples the invention will be described in more detail.

## EXAMPLES

The following definitions of terms and determination methods apply for the above general description of the invention as well as to the below examples unless otherwise defined.

### 1. Measuring Methods

### Quantification of microstructure by NMR spectroscopy

Quantitative nuclear-magnetic resonance (NMR) spectroscopy was used to quantify the isotacticity and comonomer content of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For polypropylene homopolymers approximately 200 mg of material was dissolved in *1,2*-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromoleucles 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra

For ethylene-propylene copolymers approximately 200 mg of material was dissolved in 3 ml of *1*,2-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme(Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 6144 (6k) transients were acquired per spectra.

Quantitative $^{13}C\{^1H\}$ NMR spectra were processed, integrated and relevant quantitative properties determined from the integrals using proprietary computer programs.

For ethylene-propylene copolymers all chemical shifts were indirectly referenced to the central methylene group of the ethylene block (EEE) at 30.00 ppm using the chemical shift of the solvent. This approach allowed comparable referencing even when this structural unit was not present.

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (\ mmmm\ /\ \text{sum of all pentads}\ )$$

The mole fraction of ethylene in the polymer was quantified using the method of Wang et. al. (Wang, W-J., Zhu, S., Macromolecules 33 (2000), 1157) through integration of multiple signals across the whole spectral region of a $^{13}C\{^1H\}$ spectra acquired using defined conditions. This method was chosen for its accuracy, robust nature and ability to account for the presence of regio-defects when needed. Integral regions were slightly adjusted to increase applicability to a wider range of comonomer contents.

The mole percent comonomer incorporation in the polymer was calculated from the mole fraction according to:

$$E\ [mol\%] = 100 * fE$$

The weight percent comonomer incorporation in the polymer was calculated from the mole fraction according to:

$$E\ [wt\%] = 100 * (\ fE * 28.05\ ) / (\ (fE * 28.05) + ((1\text{-}fE) * 42.08)\ )$$

The comonomer sequence distribution at the triad level was determined using the method of Kakugo et al. (Kakugo, M., Naito, Y., Mizunuma, K., Miyatake, T. Macromolecules 15 (1982) 1150) through integration of multiple signals across the whole spectral region of a $^{13}C\{^1H\}$ spectra acquired using defined conditions. This method was chosen for its robust nature. Integral regions were slightly adjusted to increase applicability to a wider range of comonomer contents.

The mole percent of a given comonomer triad sequence in the polymer was calculated from the mole fraction determined by the method of Kakugo et at. (Kakugo, M., Naito, Y., Mizunuma, K., Miyatake, T. Macromolecules 15 (1982) 1150) according to:

$$XXX\ [mol\%] = 100 * fXXX$$

**$MFR_2$ (230 °C)** is measured according to ISO 1133 (230 °C, 2.16 kg load)

**Xylene cold soluble fraction (XCS wt%)**

The xylene cold soluble fraction (XCS) is determined at 23 °C according to ISO 6427.

**melt strength and melt extensibility**

The test described herein follows ISO 16790:2005.

The strain hardening behaviour is determined by the method as described in the article "Rheotens-Mastercurves and Drawability of Polymer Melts", M. H. Wagner, Polymer Engineering and Sience, Vol. 36, pages 925 to 935. The content of the document is included by reference. The strain hardening behaviour of polymers is analysed by Rheotens apparatus (product of Göttfert, Siemensstr.2, 74711 Buchen, Germany) in which a melt strand is elongated by drawing down with a defined acceleration.

The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with a lab extruder

HAAKE Polylab system and a gear pump with cylindrical die (L/D = 6.0/2.0 mm). For measuring F30 melt strength and v30 melt extensibility, the pressure at the extruder exit (= gear pump entry) is set to 30 bars by by-passing a part of the extruded polymer. For measuring F200 melt strength and v200 melt extensibility, the pressure at the extruder exit (= gear pump entry) is set to 200 bars by by-passing a part of the extruded polymer.

The gear pump was pre-adjusted to a strand extrusion rate of 5 mm/s, and the melt temperature was set to 200°C. The spinline length between die and Rheotens wheels was 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand (2) drawn down is 120 mm/sec2. The Rheotens was operated in combination with the PC program EXTENS. This is a real-time data-acquisition program, which displays and stores the measured data of tensile force and drawdown speed. The end points of the Rheotens curve (force versus pulley rotary speed), where the polymer strand ruptures, are taken as the F30 melt strength and v30 melt extensibilty values, or the F200 melt strength and v200 melt extensibilty values, respectively.

**Melting temperature ($T_m$) and heat of fusion ($H_f$), crystallization temperature** ($T_c$) **and heat of crystallization ($H_c$):** measured with Mettler TA820 differential scanning calorimetry (DSC) on 5 to 10 mg samples. DSC is run according to ISO 3146 / part 3 /method C2 in a heat / cool / heat cycle with a scan rate of 10 °C/min in the temperature range of +23 to +210°C. Crystallization temperature and heat of crystallization ($H_c$) are determined from the cooling step, while melting temperature and heat of fusion ($H_f$) are determined from the second heating step

**Electrical breakdown strength**

The electrical breakdown strength was measured and evaluated as described in IEEE Transactions on Dielectrics and Electrical Insulation (2013), Vol. 20(3), pp. 937-946. The method and the statistical evaluation leading to the final result are briefly outlined in the following, details can be found in the cited literature. Generally in breakdown testing, several specimens of the same material (same film) are tested and a number of breakdown results (voltage, kV) become available. Commonly, to derive an average result representative of the material, further statistical treatment of the gathered results is necessary. Specific to failure testing, as in electrical failure testing, is that the measured individual results are distributed according to a Weibull distribution [see for example Dissado L.A., Fothergill J.C., Wolfe S.V., Hill R.M., IEEE Transactions on Electrical Insulation, EI-19 (3), 227-233 (1984)]. It is common procedure to evaluate data generated in dielectric breakdown testing using Weibull statistics, as for example described in IEC 60727, part 1 & 2. As the final result, i.e. as the average breakdown strength (breakdown field) of a material, the breakdown field (kV/mm) at which 63.2% of specimens will fail is usually reported. The method described in IEEE Transactions on Dielectrics and Electrical Insulation (2013), Vol. 20(3), pp. 937-946, follows these outlined principles, namely measuring several breakdowns per material and obtaining an average breakdown result by treating the gathered data as Weibull distributed, and using the 63.2 percentile. The specific features of the method according to IEEE Transactions on Dielectrics and Electrical Insulation (20013), Vol. 20(3), pp. 937-946 is that on a reasonably large area ($81cm^2$) of the BOPP film, a high number of breakdowns (40) is recorded and that after a breakdown had occurred, the system continues to increase the voltage. This is an advantage over the method described IEC 60243 part 1 (1998) wherein the system short circuits after the first breakdown. The measurement is repeated 6 times, so that 240 breakdown data become available, measured on a total area of 486 $cm^2$. These 240 breakdowns have been treated using an additively mixed 2-parameter Weibull distribution (W. Hauschild and W. Mosch, Statistical Techniques for High-Voltage Engineering, Philadephia, IET, UK, 1992).

**Ash content:** Ash content is measured according to ISO 3451-1 (1997)

**Wide-angle X-ray Scattering (WAXS)**

The determination of crystallinity and of polymorphic composition was performed in reflection geometry using a Bruker D8 Discover with GADDS x-ray diffractometer operating with the following settings: x-ray generator: 30 kV and 20 mA; $\theta_1$ = 6° & $\theta_2$ = 13°; sample-detector distance: 20 cm; beam size (collimator): 500 μm; and duration/scan: 300 seconds. 3 measurements have been performed on each sample. Intensity vs. 2θ curves between 2θ = 10° and 2θ = 32.5° were obtained by integrating the 2-dimensional spectra. The quantification of intensity vs. 2θ curves were then performed as follows:

Intensity vs. 2θ curve was acquired with the same measurement settings on an amorphous iPP sample, which was prepared by solvent extraction. An amorphous halo was obtained by smoothing the intensity vs. 2θ curve. The amorphous halo has been subtracted from each intensity vs. 2θ curve obtained on actual samples and this results in the crystalline curve.

The crystallinity index $X_c$ is defined with the area under the crystalline curve and the original curve using the method proposed by Challa et al. (Makromol. Chem. vol.56 (1962), pages 169-178) as:

$$X_C = \frac{Area\ under\ crystalline\ curve}{Area\ under\ original\ spectrum} \times 100$$

In a two-phase crystalline system (containing α- and β-modifications), the amount of β-modification within the crystalline phase B was calculated using the method proposed by Turner-Jones et al. (Makromol. Chem. Vol.75 (1964), pages 134-158) as:

$$B = \frac{I^{\beta}(300)}{I^{\alpha}(110) + I^{\alpha}(040) + I^{\alpha}(130) + I^{\beta}(300)}$$

where, $I^{\beta}(300)$ is the intensity of β(300) peak, $I^{\alpha}$ (110) is the intensity of α(110) peak, $I^{\alpha}(040)$ is the intensity of α(040) peak and $I^{\alpha}(130)$ is the intensity of α(130) peak obtained after subtracting the amorphous halo. The wt.-% of β-form was calculated by multiplying B by 100.

**2. Examples:**

The propylene homopolymer (A) of the present invention is the commercial product HC300BF of Borealis AG (Austria), having an $MFR_2$ of 3.3 g/10min and an ash content of 18ppm.

The long chain branched polypropylene (B) of the present invention was prepared from a linear propylene homopolymer powder, by a reactive extrusion in the presence of butadiene and peroxide as described in the following. Both the butadiene and the peroxide (75 % solution of tert-butylperoxy isopropyl carbonate "Trigonox BPIC-C75" of Akzo Nobel) were pre-mixed with the linear PP powder (resulting in a peroxide concentration of 0.625 wt% and butadiene concentration of 1.6 wt%, based on the weight of the linear PP powder) before the melt-mixing step in a horizontal mixer with paddle stirrer at a temperature of 65°C, maintaining an average residence time of 15 to 20 minutes. The pre-mixture was transferred under inert atmosphere to a co-rotating twin screw extruder of the type Theyson TSK60 having a barrel diameter of 60 mm and an L/D-ratio of 48 equipped with a high intensity mixing screw having 3 kneading zones and a two-step degassing setup.

The final long chain branched polypropylene (B) had an $MFR_2$ of 2.1 g/10min and an ash content of 170 ppm. It had a F30 melt strength of 36 cN and a v30 melt extensibility of 260mm/s.

Commercially available beta nucleating agent Cinquasia Gold YT-923-D was used in the present invention.

The respective amounts (see table 1) of components A, B and beta nucleating agent were mixed in a twin screw extruder.

The BOPP films used for the breakdown strength measurements have been obtained by first subjecting the materials of table 1 to a compression molding (CM) process and subsequent biaxial stretching. The stabilized resins were pressed into 800μm thick sheets, 24x24cm at a temperature of 200°C for 3 minutes and cooled down to 40°C at a (slow) cooling rate of 15°C/min. For the subsequent biaxial orientation, square specimens were cut out from each sheet (8.5 cm by 8.5 cm samples). These specimens were biaxially stretched on a BOPP machine ("Karo IV laboratory stretcher" Brückner Maschinenbau GmbH, Germany). The stretching-process was done at a strain rate of 400%/s and temperature of 155°C (for IE1, CE1, CE2, CE3). The stress-strain curves obtained from the stretching process is shown in Figure 1, which indicates the improved draw ratio and reduced stress of the IE1 material upon CE1 and CE2 materials and reflects the improved processability of the inventive example in the present invention.

Table 1

| | | CE1 | CE2 | CE3 | IE1 |
|---|---|---|---|---|---|
| amount of A | wt% | 100.0% | 99.0% | 100.0% | 99.0% |
| amount of B | wt% | - | 1.0% | - | 1.0% |
| $MFR_2$ of composition | g/10 min | 3.3 | 2.9 | 2.7 | 2.8 |
| Ash of composition | ppm | 18 | 25 | 15 | 25 |
| beta-nucleator | ppm | - | - | 8 | 5 |
| $T_c$ | °C | 117.7 | 126.3 | 124.5 | 125.8 |
| $T_m\alpha$ | °C | 164.0 | 166.0 | 170.0 | 165.9 |

(continued)

| | | CE1 | CE2 | CE3 | IE1 |
|---|---|---|---|---|---|
| $T_m\beta$ | °C | 149.5 | - | 152.7 | 151.9 |
| $X_c$ | % | 66.7 | 67.8 | 72.8 | 68.2 |
| Beta | % | 25 | 14 | 94 | 23 |
| BOPP film thickness | μm | 4.5 | 5.5 | - | 5.7 |
| DC Breakdown field at 63.2% probability | kV/mm | 706 | 718 | - | 730 |
| A: propylene homopolymer (A)<br>B: long chain branched polypropylene (B)<br>$T_c$: crystallization temperature<br>$T_m\alpha$: melt temperature of α-phase<br>$T_m\beta$: melt temperature of β-phase<br>$X_c$: crystallinity index<br>Beta: amount of β-modification within the crystalline phase | | | | | |

**Claims**

1. Polypropylene composition comprising

    a) 95.0-99.9 wt% of propylene homopolymer (A) having

        (i) a melt flow rate $MFR_2$ (230 °C) measured according to ISO 1133 in the range of 1.5 to 10 g/10min,
        (ii)an ash content of < 60 ppm,

    b) 0.1- 5.0 wt% of long chain branched polypropylene (B), and
    c) up to 1000 ppm of beta-nucleating agent.

2. Polypropylene composition according to claim 1, **characterised in that** the crystallization temperature ($T_c$) of the composition is 120.0-130.0 °C.

3. Polypropylene composition according to claim 1 or 2, **characterised in that** it shows two melting peaks, where the melting temperature $Tm_\alpha$ is in the range of 161.0 to 170.0 °C, and the melting temperature $Tm_\beta$ is in the range of 148.0 to 160.0 °C.

4. Polypropylene composition according to any of the preceding claims, wherein propylene homopolymer (A) is an isotactic polypropylene with an isotacticity of from 96.0% to 99.5%.

5. Polypropylene composition according to any of the preceding claims, wherein the xylene soluble content of the propylene homopolymer (A) measured according to ISO 6427 is from 0.3 wt% to 2.0 wt%.

6. Polypropylene composition according to any of the preceding claims, wherein the long chain branched polypropylene (B) has

    a) a F30 melt strength of at least 15 cN, determined at 200°C according to ISO 16790:2005; and
    b) a melt extensibility v30 of at least 200 m/s, determined at 200°C according to ISO 16790:2005.

7. Polypropylene composition according to any of the preceding claims, wherein the beta-nucleating agent comprises any one or a mixture of 5,12-dihydro-quino[2,3-b]acridine-7,14-dione (CAS 1047-16-1), quino[2,3-b]acridine-6,7,13,14(5H,12H)-tetrone (CAS 1503-48-6), 5,6,12,13-tetrahydroquino[2,3-b]acridine-7,14-dione (CAS 5862-38-4), N,N'-dicyclohexyl-2,6-naphtalene dicarboxamide (CAS 153250-52-3) and salts of dicarboxylic acids with at least 7 carbon atoms with metals of group IIa of the periodic table.

8. Polypropylene composition according to any of the preceding claims, wherein the polypropylene composition having

an ash content of < 60 ppm.

**9.** Cast film comprising a polypropylene composition according to any of the preceding claims, **characterised in that** the crystallinity index ($X_c$) measured by Wide-angle x-ray scattering (WAXS) is at least 55.0%.

**10.** Cast film according to claim 9, **characterised in that** the composition has a content of β-form crystals of 10-50% measured by Wide-angle x-ray scattering (WAXS)

**11.** Biaxially oriented polypropylene film, containing a polypropylene composition according to any of the claims 1-8.

**12.** Biaxially oriented polypropylene film according to claim 11, **characterised in that** the film has dielectric breakdown field strength of at least 600 kV/mm, measured on films having a thickness between 5-6μm, according to the method and statistical treatment as described in IEEE Transactions on Dielectrics and Electrical Insulation (2013), Vol. 20(3), pp. 937-946.

**13.** Use of the Biaxially oriented polypropylene film according to claim 11 or 12 as capacitor film.

## Patentansprüche

**1.** Polypropylen-Zusammensetzung, umfassend

a) 95, 0-99, 9 Gew.-% Propylen-Homopolymer (A) mit

(i) einer Schmelze-Fließ-Rate $MFR_2$ (230°C), gemessen gemäß ISO 1133, im Bereich von 1,5 bis 10 g/10 min,
(ii) einem Aschegehalt von < 60 ppm,

b) 0,1 - 5,0 Gew.-% langkettiges verzweigtes Polypropylen (B) und
c) bis zu 1000 ppm Beta-Nukleierungsmittel.

**2.** Polypropylen-Zusammensetzung nach Anspruch 1, **dadurch gekennzeichnet, dass** die Kristallisationstemperatur ($T_c$) der Zusammensetzung 120,0-130,0°C beträgt.

**3.** Polypropylen-Zusammensetzung nach Anspruch 1 oder 2, **dadurch gekennzeichnet, dass** sie zwei Schmelzpeaks zeigt, wobei die Schmelztemperatur $Tm_{\alpha}$ im Bereich von 161,0 bis 170,0°C liegt, und die Schmelztemperatur $Tm_{\beta}$ im Bereich von 148,0 bis 160,0°C liegt.

**4.** Polypropylen-Zusammensetzung nach einem der vorangehenden Ansprüche, wobei Propylen-Homopolymer (A) ein isotaktisches Polypropylen mit einer Isotaktizität von 96,0 % bis 99,5 % ist.

**5.** Polypropylen-Zusammensetzung nach einem der vorangehenden Ansprüche, wobei der in Xylol lösliche Gehalt des Propylen-Homopolymers (A), gemessen gemäß ISO 6427, 0,3 Gew.-% bis 2,0 Gew.-% beträgt.

**6.** Polypropylen-Zusammensetzung nach einem der vorangehenden Ansprüche, wobei das langkettige verzweigte Polypropylen (B) aufweist

a) eine F30-Schmelzfestigkeit von mindestens 15 cN, bestimmt bei 200°C gemäß ISO 16790:2005; und
b) eine Schmelzdehnbarkeit v30 von mindestens 200 m/s, bestimmt bei 200°C gemäß ISO 16790:2005.

**7.** Polypropylen-Zusammensetzung nach einem der vorangehenden Ansprüche, wobei das Beta-Nukleierungsmittel ein beliebiges oder ein Gemisch aus 5,12-Dihydro-chino[2,3-b]acridin-7,14-dion (CAS 1047-16-1), Chino-[2,3-b]acridin-6,7,13,14(5H,12H)-tetron (CAS 1503-48-6), 5,6,12,13-Tetrahydrochino[2,3-b]-acridin-7,14-dion (CAS 5862-38-4), N,N'-Dicyclohexyl-2,6-naphthalindicarboxamid (CAS 153250-52-3) und Salzen von Dicarbonsäuren mit mindestens 7 Kohlenstoffatomen mit Metallen der Gruppe IIa des Periodensystems umfasst.

**8.** Polypropylen-Zusammensetzung nach einem der vorangehenden Ansprüche, wobei die Polypropylen-Zusammensetzung einen Aschegehalt von < 60 ppm aufweist.

9. Gieß-Folie, umfassend eine Polypropylen-Zusammensetzung nach einem der vorangehenden Ansprüche, **dadurch gekennzeichnet, dass** der Kristallinitätsindex ($X_c$), gemessen durch Weitwinkel-Röntgenstreuung (WAXS), mindestens 55,0 % beträgt.

10. Gieß-Folie nach Anspruch 9, **dadurch gekennzeichnet, dass** die Zusammensetzung einen Gehalt an β-förmigen Kristallen von 10-50 %, gemessen durch Weitwinkel-Röntgenstreuung (WAXS), aufweist.

11. Biaxial verstreckte Polypropylen-Folie, die eine Polypropylen-Zusammensetzung nach einem der Ansprüche 1-8 enthält.

12. Biaxial verstreckte Polypropylen-Folie nach Anspruch 11, **dadurch gekennzeichnet, dass** die Folie eine dielektrische Durchschlagsfeldstärke von mindestens 600 kV/mm, gemessen an Folien mit einer Dicke zwischen 5-6 pm, gemäß dem Verfahren und der statistischen Behandlung, wie in IEEE Transactions on Dielectrics and Electrical Insulation (2013), Bd. 20(3), Seiten 937-946 beschrieben, aufweist.

13. Verwendung der biaxial verstreckten Polypropylen-Folie nach Anspruch 11 oder 12 als Kondensator-Folie.

**Revendications**

1. Composition de polypropylène comprenant

   a) 95,0 à 99,9 % en poids d'un homopolymère de propylène (A) ayant

      (i) un indice de fluage $MFR_2$ (230°C), mesuré conformément à la norme ISO 1133, dans la plage de 1,5 à 10 g/10 min,
      (ii) une teneur en cendres < 60 ppm,

   b) 0,1 à 5,0 % en poids d'un polypropylène ramifié à longue chaîne (B), et
   c) jusqu'à 1000 ppm d'agent de bêta-nucléation.

2. Composition de polypropylène selon la revendication 1, **caractérisée en ce que** la température de cristallisation ($T_c$) de la composition est de 120,0 à 130,0°C.

3. Composition de polypropylène selon la revendication 1 ou 2, **caractérisée en ce qu'**elle présente deux pics de fusion, où le point de fusion $Tm_{\alpha}$ est dans la plage de 161,0 à 170,0°C, et le point de fusion $Tm_{\beta}$ est dans la plage de 148,0 à 160,0°C.

4. Composition de polypropylène selon l'une quelconque des revendications précédentes, dans laquelle l'homopolymère de propylène (A) est un polypropylène isotactique avec une isotacticité de 96,0 % à 99,5 %.

5. Composition de polypropylène selon l'une quelconque des revendications précédentes, dans laquelle la teneur soluble dans le xylène de l'homopolymère de propylène (A), mesurée conformément à la norme ISO 6427, est de 0,3 % en poids à 2,0 % en poids.

6. Composition de polypropylène selon l'une quelconque des revendications précédentes, dans laquelle le polypropylène ramifié à longue chaîne (B) a

   a) une résistance à l'état fondu F30 d'au moins 15 cN, déterminée à 200°C conformément à la norme ISO 16790:2005 ; et
   b) une extensibilité à l'état fondu v30 d'au moins 200 m/s, mesurée à 200°C conformément à la norme ISO 16790:2005.

7. Composition de polypropylène selon l'une quelconque des revendications précédentes, dans laquelle l'agent de bêta-nucléation comprend l'un quelconque ou un mélange de 5,12-dihydroquino[2,3-b]acridine-7,14-dione (CAS 1047-16-1), quino[2,3-b]acridine-6,7,13,14(5H,12H)-tétrone (CAS 1503-48-6), 5,6,12,13-tétrahydroquino[2,3-b]acridine-7,14-dione (CAS 5862-38-4), N,N'-dicyclohexyl-2,6-naphtalènedicarboxamide (CAS 153250-52-3) et les sels d'acides dicarboxylique ayant au moins 7 atomes de carbone avec des métaux du Groupe IIa du Tableau

Périodique.

8. Composition de polypropylène selon l'une quelconque des revendications précédentes, dans laquelle la composition de polypropylène a une teneur en cendres < 60 ppm.

9. Film coulé comprenant une composition de polypropylène selon l'une quelconque des revendications précédentes, **caractérisé en ce que** l'indice de cristallinité ($X_c$), mesuré par dispersion des rayons X aux grands angles (WAXS), est d'au moins 55,0 %.

10. Film coulé selon la revendication 9, **caractérisé en ce que** la composition a une teneur en cristaux de forme $\beta$ de 10 à 50 %, mesurée par dispersion des rayons X aux grands angles (WAXS).

11. Film de polypropylène à orientation biaxiale contenant une composition de polypropylène selon l'une quelconque des revendications 1 à 8.

12. Film de polypropylène à orientation biaxiale selon la revendication 11, **caractérisé en ce que** le film a une intensité de champ de rupture diélectrique d'au moins 600 kV/mm, mesurée sur des films ayant une épaisseur comprise entre 5 et 6 $\mu$m, conformément au procédé et au traitement statistique tels que décrits dans IEEE Transactions on Dielectrics and Electrical Insulation (2013), vol. 20 (3), pages 937-946.

13. Utilisation du film de polypropylène à orientation biaxiale selon la revendication 11 ou 12 en tant que film de condensateur.

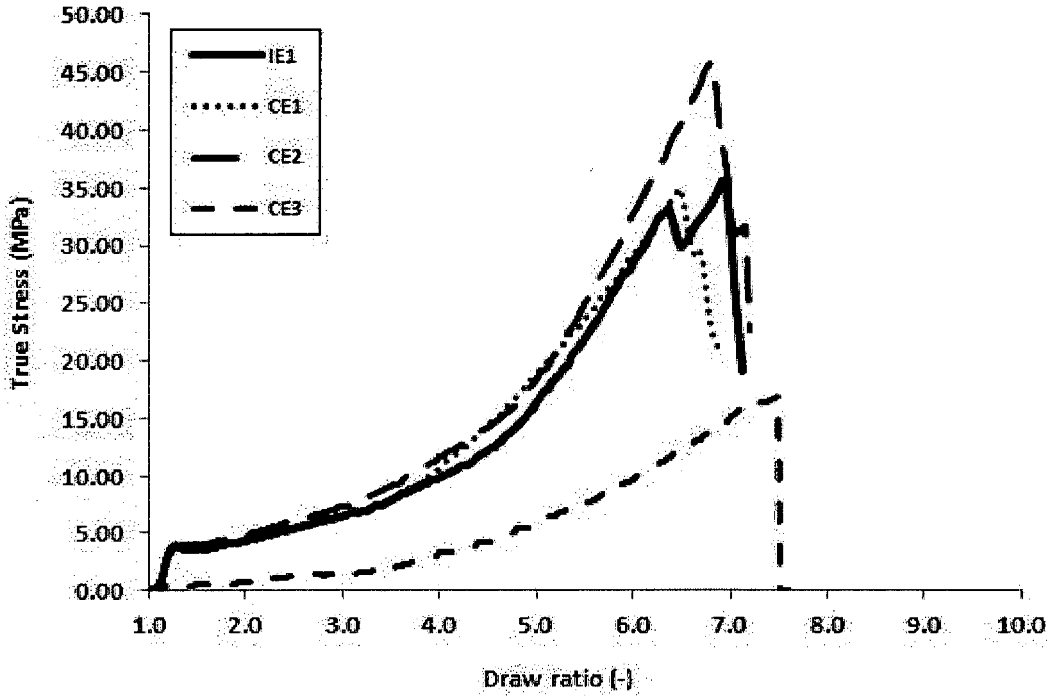


**Figure 1:** Comparison of the stress-strain curves obtained at 155 °C measured on IE1, CE1, CE2 and CE3 samples

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2701165 A1
- EP 2684676 A1
- EP 1892264 A
- EP 0879830 A1
- EP 0574801 A
- EP 0574804 A
- EP 0190889 A2
- EP 0384431 A2
- EP 0142724 A2
- EP 0678527 A
- EP 0688817 A
- EP 0450342 A
- EP 177961 A
- EP 682066 A


### Non-patent literature cited in the description


- *CHEMICAL ABSTRACTS,* 1047-16-1
- *CHEMICAL ABSTRACTS,* 1503-48-6
- *CHEMICAL ABSTRACTS,* 5862-38-4
- *CHEMICAL ABSTRACTS,* 153250-52-3
- *CHEMICAL ABSTRACTS,* 19455-79-9
- *IEEE Transactions on Dielectrics and Electrical Insulation,* vol. 20 (3), 937-946
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **SINGH, G. ; KOTHARI, A. ; GUPTA, V.** *Polymer Testing,* 2009, vol. 28 (5), 475
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **KAKUGO, M. ; NAITO, Y. ; MIZUNUMA, K. ; MIYATAKE, T.** *Macromolecules,* 1982, vol. 15, 1150
- **M. H. WAGNER.** Rheotens-Mastercurves and Drawability of Polymer Melts. *Polymer Engineering and Sience,* vol. 36, 925-935
- *IEEE Transactions on Dielectrics and Electrical Insulation,* 2013, vol. 20 (3), 937-946
- **DISSADO L.A. ; FOTHERGILL J.C. ; WOLFE S.V. ; HILL R.M.** *IEEE Transactions on Electrical Insulation,* 1984, vol. EI-19 (3), 227-233
- **W. HAUSCHILD ; W. MOSCH.** Statistical Techniques for High-Voltage Engineering. IET, 1992
- **CHALLA et al.** *Makromol. Chem.,* 1962, vol. 56, 169-178
- **TURNER-JONES et al.** *Makromol. Chem.,* 1964, vol. 75, 134-158